# FASCICULE DE BREVET EUROPEEN

(11) **EP 0 360 654 B1**
(45) Date de publication et mention de la délivrance du brevet: **27.01.1993**
(21) Numéro de dépôt: 89402441.3
(22) Date de dépôt: 07.09.1989
(51) Int. Cl.: H01J 35/10, F16C 39/06

(54) **Système de suspension d'une anode tournante de tube à rayons X comportant des paliers magnétiques passifs**
Aufhängungssystem einer Röntgenröhren-Drehanode mit passiven magnetischen Lagern
Suspension system for an X-ray tube rotary anode with passive magnetic bearings

(30) Priorité: 23.09.1988 FR 8812483
(43) Date de publication de la demande: 28.03.1990
(73) Titulaire: GENERAL ELECTRIC CGR S.A., F-92130 Issy les Moulineaux (FR)
(72) Inventeur: Doukhan, Marc CABINET BALLOT-SCHMIT, F-75116 Paris (FR); Noualhaguet, Pierre CABINET BALLOT-SCHMIT, F-75116 Paris (FR); Laurent, Michel CABINET BALLOT-SCHMIT, F-75116 Paris (FR)
(74) Mandataire: Ballot, Paul Denis Jacques

(56) Documents cités:
- EP-A- 0 201 406
- DE-C- 945 277
- FR-A- 2 231 085
- PATENT ABSTRACTS OF JAPAN, vol. 6, no. 95 (E-110)[973], 3 juin 1982, page 141 E 110 & JP-A-57 30 249
- PATENT ABSTRACTS OF JAPAN, vol. 11, no. 249 (E-532)[2696], 13 août 1987, page 67 E 532 & JP-A-62 61 251
- REVUE GENERALE DE L'ELECTRICITE no. 10, octobre 1984, pages 648-653, Paris, FR; T. REDARCE et al.: "L'utilisation des aimants permanents dans la construction des paliers magnétiques"

## Description

L'invention concerne les tubes à rayons X et, plus particulièrement, un système de suspension de l'anode tournante qui ne comporte que des paliers magnétiques passifs.

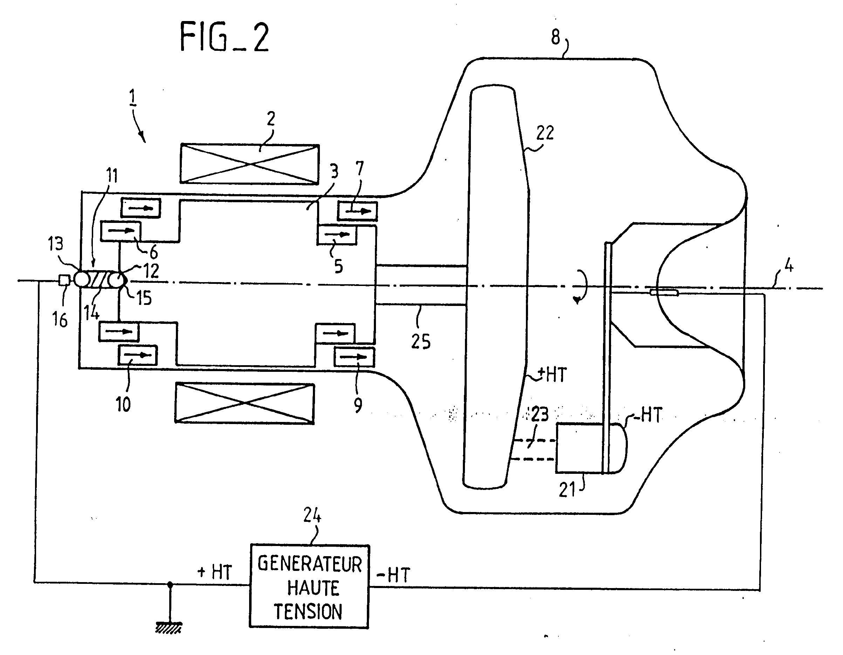

Les tubes à rayons X pour diagnostic médical par exemple, sont généralement constitués (figure 2) comme une diode, c'est-à-dire avec une cathode 21 et une anode 22 ou anti-cathode, ces deux électrodes étant enfermées dans une enveloppe 8 étanche au vide et qui permet de réaliser l'isolement électrique entre ces deux électrodes. La cathode 21 produit un faisceau d'électrons 23 et l'anode 22 reçoit ces électrons sur une petite surface qui constitue un foyer, d'où sont émis les rayons X.

Quand la haute tension d'alimentation est appliquée par un générateur 24 aux bornes de la cathode 21 et de l'anode 22 de façon que la cathode soit au potentiel négatif(-HT), un courant dit courant anodique s'établit dans le circuit au travers du générateur 24 produisant la haute tension d'alimentation; le courant anodique traverse l'espace entre la cathode et l'anode sous la forme du faisceau d'électrons 23 qui bombardent le foyer.

Une faible proportion de l'énergie dépensée à produire le faisceau d'électrons 23 est transformée en rayons X, le reste de cette énergie est transformée en chaleur. Aussi compte tenu également des puissances instantanées importantes mises en jeu (de l'ordre de 100 KW) et des petites dimensions du foyer (de l'ordre du millimètre) les constructeurs ont depuis longtemps réalisé des tubes à rayons X à anodes tournantes où l'anode est mise en rotation pour répartir le flux thermique sur une couronne appelée couronne focale, d'aire beaucoup plus grande que le foyer, l'intérêt étant d'autant plus grand que la vitesse de rotation est élevée (en général entre 3.000 et 12.000 tours par minute).

L'anode tournante de type classique a la forme générale d'un disque ayant un axe de symétrie 4 autour duquel elle est mise en rotation à l'aide d'un moteur électrique 1; le moteur électrique a un stator 2 situé à l'extérieur de l'enveloppe 8 et un rotor 3 monté dans l'enveloppe du tube à rayons X et disposé selon l'axe de symétrie, le rotor étant mécaniquement solidarisé à l'anode par l'intermédiaire d'un arbre support 25.

De plus en plus fréquemment, on utilise des tubes à rayons X à fonctionnement permanent, ce qui conduit à une énergie dissipée de plus en plus grande. Pour mieux refroidir l'anode, on la fait tourner à des vitesses de rotation de plus en plus élevées, de l'ordre de 10.000 tours/minute dans les tubes de type mécanique dont le rotor est monté sur roulements à billes. Ces roulements à billes doivent fonctionner dans des conditions très difficiles car la température est élevée et le vide poussé du tube dans lequel ils sont disposés empêche la lubrification par un liquide.

Par ailleurs, un tel système mécanique est générateur de bruits et de vibrations qui sont préjudiciables au confort du praticien et du patient ainsi qu'à la qualité de l'image obtenue.

Pour pallier les inconvénients des systèmes mécaniques de roulement, il a été proposé des dispositifs de suspension magnétique de l'ensemble rotor-anode, ce qui évite tout frottement mécanique.

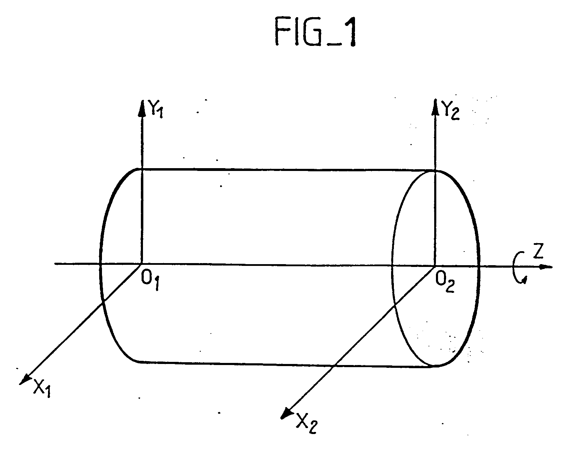

Il est rappelé que pour assurer le maintien d'un corps cylindrique de révolution 30 d'axe 0₁Z (Figure 1), il faut maîtriser cinq degrés de liberté suivant les axes O₁X₁, O₁Y₁, O₂X₂, O₂Y₂ et 0₁Z, le corps gardant la faculté de tourner autour de l'axe 0₁Z.

Conformément au théorème d'Ernshaw, il est impossible d'obtenir une complète sustentation magnétique d'un corps, c'est-à-dire sans contact matériel, uniquement de façon passive, c'est-à-dire en n'utilisant que des aimants permanents. C'est pourquoi, tous les dispositifs à paliers magnétiques qui ont été proposés jusqu'ici pour assurer la rotation d'un ensemble rotor-anode d'un tube à rayons X comportent au moins une voie active réalisée à l'aide d'un électro-aimant associé à un circuit électronique d'asservissement en position suivant l'axe correspondant à cette voie active.

On est donc amené à réaliser un système actif assez complexe pour maintenir, par exemple, la position du rotor suivant l'axe 0₁Z. Pour cela il faut des détecteurs de position dont l'information d'écart de position commande la valeur du courant dans l'électro-aimant de manière à réduire cet écart.

Le but de la présente invention est de réaliser un système de suspension d'une anode tournante de tube à rayons X du type à paliers magnétiques passifs dans lequel le maintien de la position longitudinale du rotor suivant l'axe de rotation ne nécessite pas la mise en oeuvre d'un système d'asservissement complexe.

L'invention se rapporte à un système de suspension d'une anode tournante de tube à rayons X qui comporte un rotor disposé à l'intérieur du tube, dont une extrémité supporte l'anode et un stator disposé à l'extérieur du tube, caractérisé en ce qu'il comprend au moins deux premières couronnes annulaires aimantées fixées au rotor et au moins deux autres couronnes annulaires aimantées fixées à l'enveloppe du tube, lesdites couronnes étant disposées les unes par rapport aux autres de manière que le rotor puisse tourner sans frottement mécanique autour d'un axe de rotation et qu'il soit décalé axialement de manière à venir en contact sur une butée qui est conductrice et qui est disposée du côté opposé à celui de l'anode.

D'autres caractéristiques et avantages de la présente invention apparaîtront à la lecture de la description suivante d'un exemple particulier de réalisation, ladite description étant faite en référence avec le dessin joint dans lequel :
- la figure 1 est un schéma de principe montrant les six degrés de liberté d'un corps susceptible de tourner autour de l'axe O,Z, et
- la figure 2 est une coupe schématique longitudinale d'un tube à rayons X comportant un système de suspension à paliers magnétiques passifs selon la présente invention.

Sur la figure 2 déjà en partie décrite dans le préambule, un moteur d'entraînement 1 d'une anode 22 du tube à rayons X 1 comprend un rotor 3 qui peut tourner autour d'un axe de rotation 4. L'une des extrémités du rotor porte l'anode 22 par l'intermédiaire d'un arbre support 25. Ce rotor 3 est maintenu en sustentation par des aimants passifs qui, sur la figure 2, sont au nombre de quatre. Chaque extrémité du rotor 3 porte un aimant permanent 5 et 6 qui a la forme d'une couronne annulaire; le sens de l'aimantation est représenté par les flèches telle que celle référencée 7. Chaque aimant 5 et 6, porté par le rotor 3, coopère respectivement avec un aimant permanent 9 et 10 qui est fixé, par exemple, sur la paroi interne d'une enveloppe 8 du tube 1. Ces aimants permanents fixes 9 et 10 ont aussi la forme d'une couronne annulaire et le sens de leur aimantation est indiqué par les flèches 7. Le rotor 3 coopère avec un stator 2 qui est disposé à l'extérieur de l'enveloppe 8.

Il est facile de comprendre que, avec le sens des aimantations, une force magnétique de répulsion maintient écartées radialement les couronnes 5 et 6 par rapport aux couronnes 9 et 10 de sorte que le rotor 3 peut tourner autour de l'axe 4 sans contact avec les couronnes magnétiques 9 et 10. Les couronnes 5,6,9 et 10 réalisent ce qu'on appelle des paliers magnétiques passifs.

Avec les sens des aimantations indiqués sur la figure 2, on comprend également que, dans le sens longitudinal suivant l'axe de rotation 4, il existe une force longitudinale qui a tendance à faire échapper les couronnes l'une par rapport à l'autre dès que les plans de ces dernières ne sont plus exactement en coïncidence. Pour les maintenir en coïncidence, il est habituellement prévu des moyens pour détecter le déplacement longitudinal d'un côté ou de l'autre et le corriger, par exemple à l'aide d'un ou plusieurs électro-aimants.

Selon la présente invention, une telle coïncidence n'est pas recherchée mais, au contraire, il est prévu de décaler les couronnes fixes 9 et 10 et mobiles 5 et 6 l'une par rapport à l'autre dans un sens déterminé de manière à éviter l'équilibre instable de la position centrale de coïncidence. Le sens de ce décalage est tel que l'anode 22 se rapproche des couronnes fixes 9 et 10. Afin de limiter l'amplitude de ce mouvement, une butée 11 est disposée à l'extrémité du rotor opposée à celle portant l'anode 22. Cette butée sert également de conducteur électrique pour le courant anodique. Elle doit donc avoir des caractéristiques lui permettant de remplir ces deux fonctions. En tant que butée, elle doit être prévue pour présenter le minimum de frottement afin de ne pas perdre les avantages dus aux paliers magnétiques. En tant que conducteur électrique, son contact électrique avec le rotor doit être suffisamment bon pour conduire le courant anodique en évitant des échauffements locaux.

La butée 11 peut être réalisée de différentes manières en respectant les principes suivants. Le contact doit s'effectuer selon l'axe de rotation du rotor, c'est-à-dire en des points où la vitesse linéaire est quasi nulle. La nature et la géométrie des matériaux utilisés sont choisis de façon à limiter l'usure tout en permettant un bon contact électrique et une bonne conduction électrique.

La figure 2 montre un exemple particulier de réalisation d'une butée qui comprend deux billes 12 et 13 séparées par un ressort 14. La bille 12 vient en contact avec le rotor 3 dans un trou borgne de forme conique 15 centré sur l'axe de rotation 4. La bille 13 est encastrée au fond d'un trou borgne qui est aligné avec l'axe de rotation 4. La bille 13 est connectée électriquement à une borne de sortie 16 du courant anodique qui est solidaire de l'enveloppe 8. Ce trou borgne peut être réalisé soit dans l'enveloppe 8, soit par un support qui est fixé à l'enveloppe 8 par tous moyens connus. Le ressort 14 prend appui sur les deux billes 12 et 13 et travaille en compression.

Le système élastique, constitué par le rotor 3 portant l'anode 22, les couronnes annulaires magnétiques 5, 6, 9 et 10 créant une force axiale de répulsion et le ressort 14 créant une force axiale de sens inverse à la force de répulsion, doit être réglé de manière que la pression du ressort 14 soit minimale lorsque l'anode 2 est en position basse. Pour toute autre position, la pression sera plus grande et aura pour seul inconvénient d'augmenter l'usure aux points de contact entre la bille 12 et le rotor 3.

Pour réduire cette usure, il est avantageux d'interposer entre les parties en contact une mince couche d'un métal mou jouant le rôle de lubrifiant solide, comme par exemple le plomb, l'argent, l'or... et sans pour autant détériorer le contact électrique.

La butée 11 qui vient d'être décrite comporte deux billes 12 et 13 associées à un ressort 14. Ce dispositif peut être avantageusement remplacé par une seule bille qui prendrait appui, d'un côté, sur le trou borgne de forme conique 15 et de l'autre côté sur la borne de sortie 16 solidaire de l'enveloppe 8.

Les couronnes annulaires aimantées 5, 6, 9 et 10 sont construites avec des matériaux dont les qualités magnétiques, notamment l'aimantation rémanente et le champ coercitif, sont aussi bonnes que possible. Il en est ainsi d'alliages au Samarium-Cobalt ou au Fer-Néodyme-Bore. Il est à noter que ce dernier alliage se corrode et s'oxyde facilement et il est donc important que les couronnes annulaires 9 et 10 soient disposées à l'intérieur de l'enveloppe de verre 8 où règne un vide poussé.

Il est à remarquer que pour des alliages moins fragiles, les couronnes circulaires 9 et 10 peuvent être disposées à l'extérieur de l'enveloppe 8 mais, dans cette disposition, la largeur de l'entrefer est augmentée ce qui est un inconvénient.

On remarquera également que ces couronnes annulaires magnétiques sont obtenues par frittage et que de tels matériaux frittés peuvent poser problèmes lors du dégazage du tube pour obtenir un vide de 10⁻⁸ à 10⁻⁹ Tor. Aussi, il est proposé d'entourer les couronnes aimantées par une enveloppe en matériau non magnétique dont l'épaisseur serait aussi mince que possible de manière à ne pas trop augmenter l'entrefer. Une telle enveloppe pourrait aussi jouer le rôle de frettage de manière à assurer le maintien mécanique des couronnes tournantes 5 et 6, c'est-à-dire éviter leur éclatement en cas de rotation à des vitesses très élevées.

L'invention a été décrite à l'aide d'un exemple particulier de réalisation. cependant, elle peut être mise en oeuvre dans des réalisations différentes. Ainsi, par exemple, on peut utiliser plus de quatre couronnes aimantées; on peut aussi utiliser d'autres dispositifs de butée.

## Revendications

1. Système de suspension d'une anode tournante (22) de tube à rayons X à paliers magnétiques passifs, qui comporte un rotor (3) tournant autour d'un axe (4), dont une extrémité supporte l'anode (22) et un stator (2) disposé à l'extérieur du tube, au moins deux premières couronnes annulaires aimantées (5, 6) fixées au rotor (3) et au moins deux autres couronnes annulaires aimantées (9, 10) fixées à l'enveloppe (8) du tube, lesdites couronnes (5, 6, 9 et 10) étant disposées les unes par rapport aux autres de manière que le rotor (3) puisse tourner sans frottement mécanique autour de l'axe de rotation (4) et qu'il soit décalé axialement de manière à venir en contact sur une butée (11) disposée du côté opposé à celui de l'anode (22).

2. Système de suspension selon la revendication 1, caractérisé en ce que la butée (11) sert de conducteur du courant anodique.

3. Système de suspension selon la revendication 1 ou 2, caractérisé en ce que la butée (11) comprend une bille unique qui est en contact, d'un côté, avec le rotor (3) suivant l'axe de rotation (4) et, de l'autre côté, avec une borne de sortie du courant anodique qui est solidaire de l'enveloppe (8).

4. Système de suspension selon la revendication 1 ou 2, caractérisé en ce que la butée (11) comprend une première bille 12 en contact avec le rotor (3) suivant l'axe de rotation (4), une deuxième bille (13) en contact avec borne de sortie (16) du courant anodique et un ressort (14) disposé entre les deux billes (12 et 13).

5. Système de suspension selon l'une quelconque des revendications précédentes caractérisé en ce que les couronnes annulaires aimantées (9, 10) fixées à l'enveloppe (8) du tube sont disposées sur la paroi interne de l'enveloppe 8.

6. Système de suspension selon l'une quelconque des revendications 1 à 4, caractérisé en ce que les couronnes annulaires aimantées (9, 10) fixées à l'enveloppe (8) du tube sont disposées sur la paroi externe de l'enveloppe 8.

7. Système de suspension selon l'une quelconque des revendications précédentes 1 à 5, caractérisé en ce que les couronnes annulaires aimantées (5, 6, 9 et 10) sont enrobées par une enveloppe de manière à ne pas gêner le dégazage du tube.

8. Système de suspension selon l'une quelconque des revendications précédentes 1 à 7, caractérisé en ce que les couronnes annulaires aimantées (5, 6) fixées au rotor sont enrobées par une enveloppe qui a une fonction de frettage.

## Patentansprüche

1. Aufhängungssystem für eine drehbare Anode (22) einer Röntgenstrahlröhre mit passiven magnetischen tigern, enthaltend einen Rotor (3), der um eine Achse (4) drehbar ist und an einem Ende die Anode (22) trägt, und einen außerhalb der Röhre angeordneten Stator (2), wenigstens zwei erste magnetisierte ringförmige Kränze (5, 6), die am Rotor befestigt sind, und wenigstens zwei weitere magnetisierte ringförmige Kränze (9, 10), die am Röhrenkolben befestigt sind, wobei die Kränze (5, 6, 9 und 10) in Bezug aufeinander so angeordnet sind, daß der Rotor (3) ohne mechanische Reibung um die Drehachse (4) drehbar ist und axial so verschoben wird, daß er mit einem Anschlag (11) in Berührung kommt, der auf der der Anode (22) entgegengesetzten Seite angeordnet ist.

2. Aufhängungssystem nach Anspruch 1, dadurch gekennzeichnet, daß der Anschlag (11) als Leiter für den Anodenstrom dient.

3. Aufhängungssystem nach Anspruch 1 oder 2, dadurch gekennzeichnet, daß der Anschlag (11) eine einzige Kugel enthält, die einerseits mit dem Rotor (3) entlang der Drehachse (4) und andrerseits mit einer fest mit dem Kolben (8) verbundenen Ausgangsklemme für den Anodenstrom in Kontakt steht.

4. Aufhängungssystem nach Anspruch 1 oder 2, dadurch gekennzeichnet, daß der Anschlag (11) eine erste Kugel (12), die mit dem Rotor (3) entlang der Drehachse (4) in Kontakt steht, eine zweite Kugel (13), die mit einer Ausgangsklemme für den Anodenstrom in Kontakt steht, und eine zwischen den beiden Kugeln (12 und 13) angeordnete Feder (14) enthält.

5. Aufhängungssystem nach einem der vorhergehenden Ansprüche, dadurch gekennzeichnet, daß die am Kolben (8) der Röhre befestigten magnetisierten ringförmigen Kränze (9, 10) an der Innenwand des Kolbens (8) angeordnet sind.

6. Aufhängungssystem nach einem der Ansprüche 1 bis 4, dadurch gekennzeichnet, daß die am Kolben (8) der Röhre befestigten magnetisierten ringförmigen Kränze (9, 10) an der Außenwand des Kolbens (8) angeordnet sind.

7. Aufhängungssystem nach einem der vorhergehenden Ansprüche 1 bis 5, dadurch gekennzeichnet, daß die magnetisierten ringförmigen Kränze (5, 6, 9 und 10) von einer Umhüllung umschlossen sind, um die Entgasung der Röhre nicht zu beeinträchtigen.

8. Aufhängungssystem nach einem der vorhergehenden Ansprüche 1 bis 7, dadurch gekennzeichnet, daß die am Rotor befestigten magnetisierten ringförmigen Kränze (5, 6,) von einer Umhüllung umschlossen sind, die eine Verstärkungsfunktion hat.

## Claims

1. A suspension system for the rotary anode (22) of an x-ray tube using passive magnetic bearings, which comprises a rotor (3) rotating about an axis (4) and of which one end bears the anode (22) and a stator (2) arranged outside the tube, at least two first annular magnetized rings (5, 6) secured to the rotor (3) and at least two other annular magnetized rings (9, 10) secured to the envelope (8) of the tube, said rings (5, 6, 9 and 10) being so arranged in relation to each other that the rotor (3) is able to rotate without mechanical friction around the axis (4) of rotation and so that it is offset axially and comes into contact with an abutment (11) arranged on the side opposite to that of the anode (22).

2. The suspension system as claimed in claim 1, characterized in that the abutment (11) functions as an anode current conductor.

3. The suspension system as claimed in claim 1 or claim 2, characterized in that the abutment (11) comprises a single ball which is in contact, on one side, with the rotor (3) along the axis of rotation (4) and, on the other side, is in contact with an output terminal for the anode current fixed to the envelope (8).

4. The suspension system as claimed in claim 1 or claim 2, characterized in that the abutment (11) comprises a first ball (12) in contact with the rotor (3) along the axis of rotation (4), a second ball (13) in contact with an anode current output terminal (16) and a spring (14) arranged between the two balls (12 and 13).

5. The suspension system as claimed in any one of the preceding claims, characterized in that the annular magnetized rings (9, 10) secured to the envelope (8) of the tube are arranged on the inner wall surface of the envelope (8).

6. The suspension system as claimed in any one of the preceding claims 1 through 4, characterized in that the annular magnetized rings (9, 10) secured to the envelope (8) of the tube are arranged on the outer wall surface of the envelope (8).

7. The suspension system as claimed in any one of the preceding claims 1 through 5, characterized in that the annular magnetized rings (5, 6, 9 and 10) are enclosed by an envelope in order not to interfere with degassing of the tube.

8. The suspension system as claimed in any one of the preceding claims 1 through 7, characterized in that the annular magnetized rings (5, 6) secured to the rotor are enclosed by an envelope which has a mechanical supporting action.
